# EUROPÄISCHE PATENTSCHRIFT

(11) **EP 1 881 223 B1**
(45) Veröffentlichungstag und Bekanntmachung des Hinweises auf die Patenterteilung: **06.01.2010**
(21) Anmeldenummer: 07012333.6
(22) Anmeldetag: 23.06.2007
(51) Int. Cl.: F16D 55/00

(54) **Bremssattel für eine Scheibenbremse eines Kraftfahrzeugs**
Disc brake calliper for a motor vehicle
Étrier de frein à disque pour un véhicule automobile

(30) Priorität: 18.07.2006 DE 102006033159
(43) Veröffentlichungstag der Anmeldung: 23.01.2008
(73) Patentinhaber: Dr. Ing. h.c. F. Porsche Aktiengesellschaft, 70435 Stuttgart (DE)
(72) Erfinder: Aydt, Günter, 71522 Backnang (DE); Kirschner, Thomas, 70435 Stuttgart (DE)

(56) Entgegenhaltungen:
- EP-A- 1 167 804
- WO-A-03/071152
- WO-A-2004/083668
- DE-A1- 19 911 192

## Beschreibung

Die Erfindung bezieht sich auf einen Bremssattel für eine Scheibenbremse eines Kraftfahrzeugs nach dem Oberbegriff des Anspruchs 1.

Die EP 1 167 804 A1 befasst sich mit einem Gehäuse eines Bremssattels für eine Scheibenbremse der eingangs genannten Art.

Aus der DE 199 11 192 A1 ist ein Bremssattel für eine Scheibenbremse bekannt, der an seiner Unterseite mit einem geschlossenen Rahmen versehen ist, welcher der Kontur des Bremssattels rundherum folgt. Dieser Rahmen ist mit dem Gehäuse des Bremssattels fest verbunden, wodurch die Steifigkeit des Bremssattels erhöht wird.

Es hat sich bei einer Vergrößerung des Durchmessers einer Bremsscheibe für eine Scheibenbremse bei gleichen Bauraumverhältnissen des Bremssattels im Fahrzeug wie bei einer Bremsscheibe kleineren Durchmessers gezeigt, dass eine Bremssattelbrücke in der Dicke reduziert werden muss. Diese Maßnahme bedingt insgesamt eine Verringerung der Steifigkeit des Bremssattelgehäuses und somit entstehen erhebliche Schwingungsprobleme in Form von Eigenschwingungen und hieraus resultierenden Geräuschproblemen, wie beispielsweise ein Bremsenquietschen.

Es ist daher Aufgabe der Erfindung, einen Bremssattel für eine Bremsscheibe einer Scheibenbremse in einem Kraftfahrzeug zu schaffen, der einerseits einen Steifigkeitsverlust des Bremssattels kompensiert und andererseits komplex auftretende Eigenschwingungsformen des Bremssattels abbaut und ein Bremsenquietschen verhindert.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch eine Verbindung des Bremssattels mit einem Verstärkungselement die entstandenen Probleme durch die Vergrößerung des Scheibendurchmessers der Bremsscheibe und einer hierdurch bedingten Reduzierung der Brückenstärke des Bremssattels Eigenschwingungsformen des Bremssattels wirksam zu unterbinden sind. Dies wird insbesondere dadurch erzielt, indem das Gehäuse des Bremssattels am Stützrahmen über Befestigungselemente mit einem Verstärkungselement verbunden ist, das aus einem zumindest im Bereich eines Bremssattelschenkels des Gehäuses des Bremssattels angeordneten offenen Profilelement besteht. Das Verstärkungselement besteht aus einem einteiligen C-Profilelement mit einem Längssteg und angebundenen Querstegen sowie jeweils anschließenden Fortsätzen an den Querstegen und der Längssteg ist einem Fahrzeugrad zugerichtet. Die Verwendung eines solchen Verstärkungselements für den Bremssattel ergibt eine optimale Steifigkeit des Gehäuses während des Fahrbetriebs, so dass die auftretenden Eigenschwingungsformen des Bremssattels in Form von Torsions-, Biege- sowie Scher- und Schubschwingungen sowie eine Kombination aus diesen Schwingungsformen weitestgehend unterbunden werden. Hierdurch werden auch die sich aus diesen Schwingungen ergebenden (tieffrequenten) Geräuschprobleme, wie beispielsweise ein Bremsenquietschen, vermieden.

Insbesondere ist das Verstärkungselement nach der Erfindung mit einem Längssteg an der äußeren radseitigen Bremssattelhälfte angebunden, da sich in diesem Bereich des Bremssattels starke Schwingungsamplituden einstellen.

Des weiteren ist nach der Erfindung vorgesehen, dass das Verstärkungselement mit seinem Längssteg beabstandet zu einer Längskante des Bremssattels angeordnet ist und Aufnahmen zur Befestigung des Bremssattels am Radträger oder dergleichen Bauelement aufweist. Das Verstärkungselement ist mit dem Stützrahmen am Gehäuse des Bremssattels einerseits über den Längssteg und andererseits über den Fortsatz des Querstegs mittels der Befestigungselemente verbunden. Der Längssteg des Verstärkungselements weist jeweils endseitig erste Befestigungselemente auf, welche aus Schrauben bestehen, die in einem Brückenabschnitt gehalten sind. In den Fortsätzen der Querstege sind jeweils die zweiten Befestigungselemente angeordnet, welche den ersten Befestigungselementen gegenüberstehen, die aus Schrauben oder dergleichen bestehen, welche in einem Brückenabschnitt des Bremssattels gehalten sind. Durch diese Ausführung des Bremssattels und des Verstärkungselements sowie deren Befestigung am Bremssattelgehäuse wird erreicht, dass das Bremssattelgehäuse durch die feste Verschraubung mit dem Verstärkungselement, insbesondere durch eine mindestens vierfache Verschraubung, eine derartige Versteifung des Bremssattelgehäuses erzielt wird, dass das Auftreten der komplexen Eigenschwingungsformen unterbunden und in der Folge das Bremsenquietschen weitestgehend unterbunden wird. Durch die Anbindung des Verstärkungselements unmittelbar am Bremssattelgehäuse wird zudem nach der Erfindung erreicht, dass die Steifigkeit optimiert bzw. verbessert wird; denn durch eine verringerte Bremssattelaufbiegung bei hohen Druckbelastungen ergibt sich hierbei auch eine Reduzierung einer Bremsflüssigkeit-Volumenaufnahme.

Der Bremssattel nach der Erfindung weist einerseits zur Erhöhung der Stabilität im Brückenbereich zwischen den Befestigungen des Verstärkungselements am Gehäuse des Bremssattels zwei die Bremssattelschenkel miteinander verbindende mittige Brückenabschnitte auf, die zwischen sich einen Freiraum bzw. eine Ausnehmung aufweisen, wobei wenigstens in Randbereichen des Gehäuses jeweils unmittelbar benachbart der Brückenabschnitte gewichtserleichternde Aussparungen angeordnet sind. Zwischen den mittigen Brückenabschnitten und den weiteren endseitigen Brückenabschnitten des Bremssattelgehäuses ist jeweils eine Ausnehmung angeordnet und der endseitige Brückenabschnitt ist über den freiliegenden Rand des Gehäuses des Bremssattels unmittelbar mit dem Verstärkungselement über die Befestigungselemente verbunden. Hierdurch wird nach der Erfindung in vorteilhafter Weise erreicht, dass trotz einer geringen Dicke der Brückenabschnitte eine erforderliche Bremssattelsteifigkeit beibehalten wird, was insbesondere durch die zwei mittleren Brückenabschnitte erzielt wird. Damit zusätzlich noch Gewicht am Bremssattel einzusparen ist, weisen die Randbereiche des Bremssattels mehrere Aussparungen auf.

Nach einer weiteren Ausführung der Erfindung ist vorgesehen, dass die Fortsätze des Verstärkungselements am freien Ende des Bremssattels abgewinkelte Arme aufweisen, die endseitig Lagerbolzen für einen ersten Bremsbelag aufweisen, denen am Längssteg des Verstärkungselements weitere Lagerbolzen für den zweiten Bremsbelag gegenüberstehen. Am Längssteg des Verstärkungselements sind vorragende Konsolen oder Arme angeordnet, welche die Lagerbolzen für den zweiten Bremsbelag aufnehmen. Hierdurch wird in vorteilhafter Weise nach der Erfindung erreicht, dass Umfangskräfte der Bremsbeläge direkt in das Verstärkungselement eingeleitet werden. Vom Bremssattel selbst müssen im wesentlichen nur noch Zugspannkräfte übertragen werden, wobei auch Vorteile hinsichtlich des Schwingungsverhaltens erzielt werden. Die Lagerung der Bremsbeläge am Verstärkungselement ergibt zudem eine Abkopplung dieser Bremsbeläge vom Bremssattel, was für die Vermeidung von Schwingungen von Vorteil sein kann.

Ausführungsbeispiele der Erfindung sind in den Zeichnungen dargestellt und werden im folgenden näher beschrieben.

Es zeigen
- Fig. 1: eine Ansicht auf eine Bremse mit Anbindung eines Bremssattels über ein Verstärkungselement am Radträger, von innen her gesehen,
- Fig. 2: eine Ansicht auf den Bremssattel mit Verstärkungselement,
- Fig. 3: eine Ansicht auf den Bremssattel, schräg von unten her gesehen mit Verstärkungselement,
- Fig. 4: eine Ansicht auf den Bremssattel, von unten her gesehen mit Verstärkungselement,

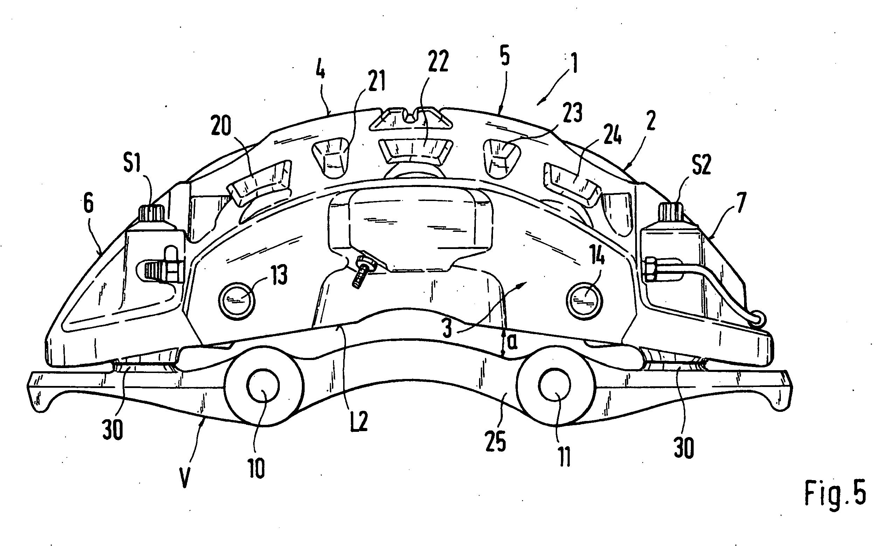

- Fig. 5: eine Ansicht auf den Bremssattel mit Verstärkungselement, von der Seite her gesehen,
- Fig. 6: eine weitere Ausführungsform des Verstärkungselements mit Lagerungen für Bremsbeläge, und
- Fig. 7: eine schaubildliche Ansicht auf das Verstärkungselement mit gelagerten Bremsbelägen.

Der Bremssattel 1 umfasst ein Gehäuse mit zwei Bremssattelschenkeln 2 und 3, die beabstandet zueinander gegenüberstehend angeordnet sind. Diese Bremssattelschenkel 2, 3 sind über Bremssattelbrücken 5, 5a bzw. 6, 7 miteinander verbunden. Sie erstrecken sich etwa halbbogenförmig quer über den Bremssattel 1 und bilden am Rand mit den freien Rändern der Bremssattelschenkel 2, 3 einen integrierten sogenannten Stützrahmen, der rundum verlaufend und geschlossen ausgeführt ist. Dieser in den Bremssattel 1 integrierte Stützrahmen 8 bildet Längs- und Querkanten L1, L2 und Q1 und Q2. Mit dem Stützrahmen 8 ist ein Verstärkungselement V; V1 verbunden, welches den Bremssattel 1 trägt und mit einem Radträger 12 oder dergleichen Bauelement eines Fahrzeugs verbunden ist.

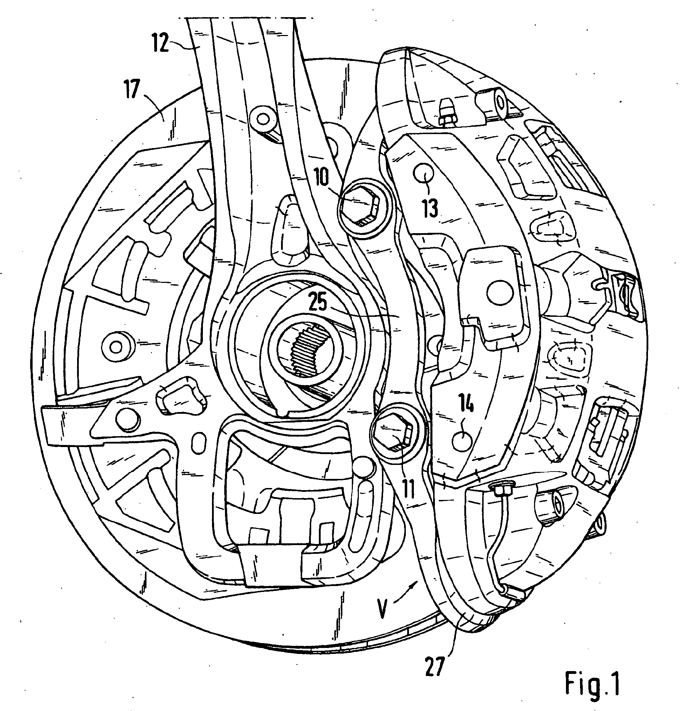

Der Bremssattel 1 ist über Schrauben, die in Aufnahmen 10, 11 angeordnet und mit dem Radträger 12 oder dergleichen am Fahrzeug fest verbunden sind, wie Fig. 1 näher zeigt. Am Bremssattel 1 sind über Lagerbolzen 13, 14; 13a, 14a Bremsbeläge 15, 15a verschiebbar zu einer Bremsscheibe 17 gehalten. Eine Beaufschlagung der Bremsbeläge 15, 15a erfolgt über Hydraulikkolben, die im Gehäuse des Bremssattels 1 geführt angeordnet sind.

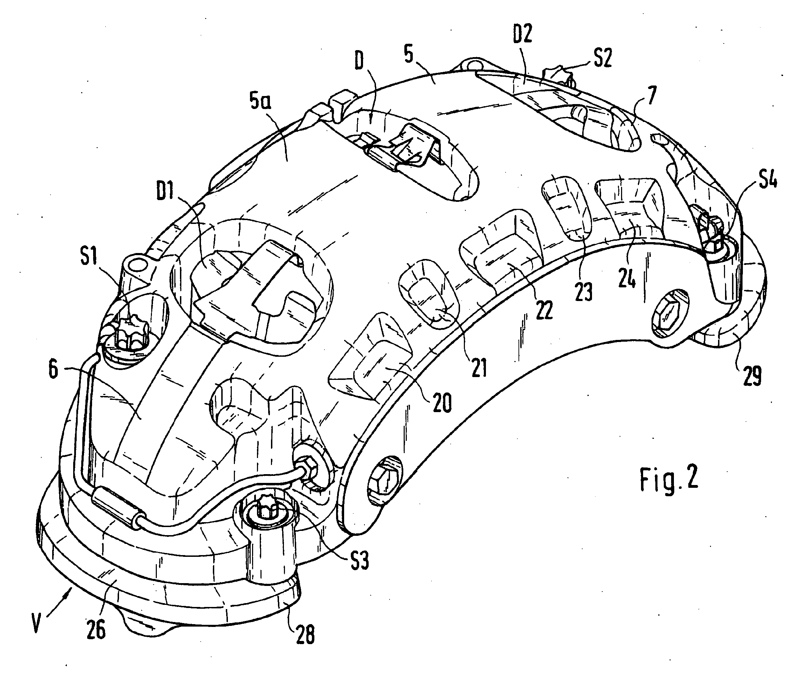

In Fig. 2 sind die Bremssattelbrücken 5, 5a und 6, 7 näher dargestellt, wobei zwischen den Bremssattelbrücken 5 und 5a eine erste Ausnehmung D oder Durchbruch angeordnet ist. Neben den Bremssattelbrücken 5 und 5a ist jeweils ein weiterer Durchbruch D1 und D2 vorgesehen, dem sich jeweils eine im Stützrahmen 8 endende Bremssattelbrücke 6 bzw. 7 anschließt. Endseitig der Bremssattelbrücken 5, 5a und 6, 7 sind jeweils Einformungen 20 bis 24 vorgesehen, wobei diese Einformungen gewichtserleichternd wirken und die Einformungen 20, 22, 24 im Bereich der Durchbrüche D1, D und D2 ein größeres Volumen aufweisen als die Einformungen 21 und 23 im Bereich der Bremssattelbrücken 5 und 5a.

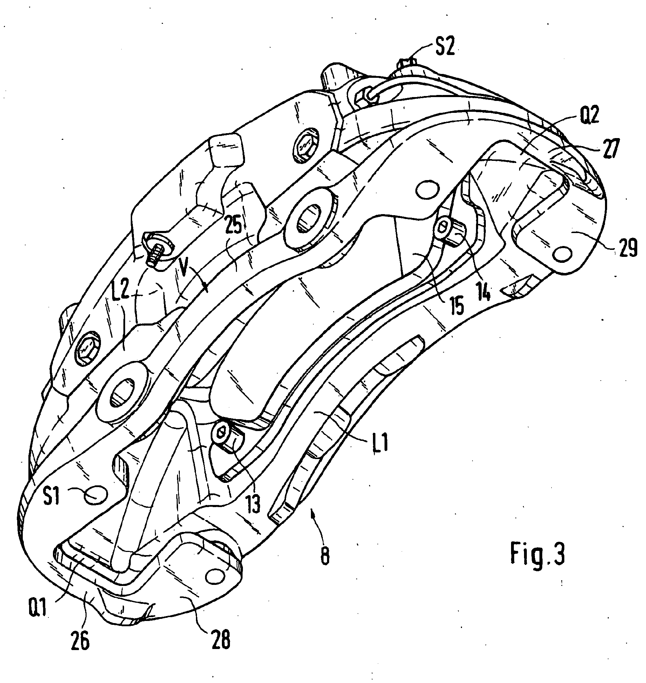

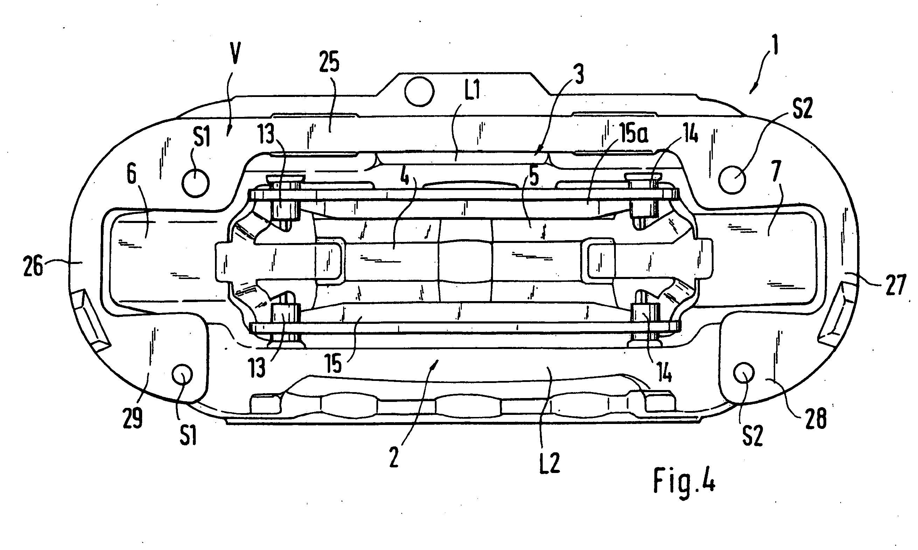

Das Verstärkungselement V; V1 besteht aus einem C-förmigen Profilelement, welches einteilig ausgeführt ist und einen Längssteg 25 sowie endseitig jeweils einen Quersteg 26 und 27 und an diese anschließende Fortsätze 28, 29 aufweist, die sich etwa parallel zum Längssteg 25 des Verstärkungselements V; V1 erstrecken, wie in Fig. 3 und 4 näher dargestellt ist.

Das Verstärkungselement V; V1 ist mit seinem Längssteg 25 einem Schwenklager bzw. Radträger 12 zugerichtet (Fig. 1) und zum einen über Schraubelemente S1 und S2 mit den vom Gehäuse des Bremssattels 1 gebildeten integrierten Stützrahmen 8 verbunden und zum anderen sind die Fortsätze 28, 29 des Verstärkungselements V; V1 über Schraubelemente S3 und S4 mit dem Stützrahmen 8 verbunden. Die Schraubelemente sind nur symbolisch dargestellt.

Der Längssteg 25 des Verstärkungselements V; V1 erstreckt sich unterhalb einer Längskante L2 des einen Bremssattelschenkels 3 des Gehäuses des Bremssattels 1 und ist beabstandet mit Abstand a zu diesem angeordnet. Ein direktes Anliegen des Verstärkungselements V; V1 am Stützrahmen 8 des Bremssattels 1 kann über sogenannte Ansätze bzw. vorstehende Anformungen 30 erfolgen, die sich unmittelbar am Stützrahmen 8 anlegen. Die Querstege 26 und 27 sowie die Fortsätze 28 und 29 sind ebenfalls in der Kontur unterhalb der Querkanten Q1 und Q2 und der Längskante L1 angeordnet.

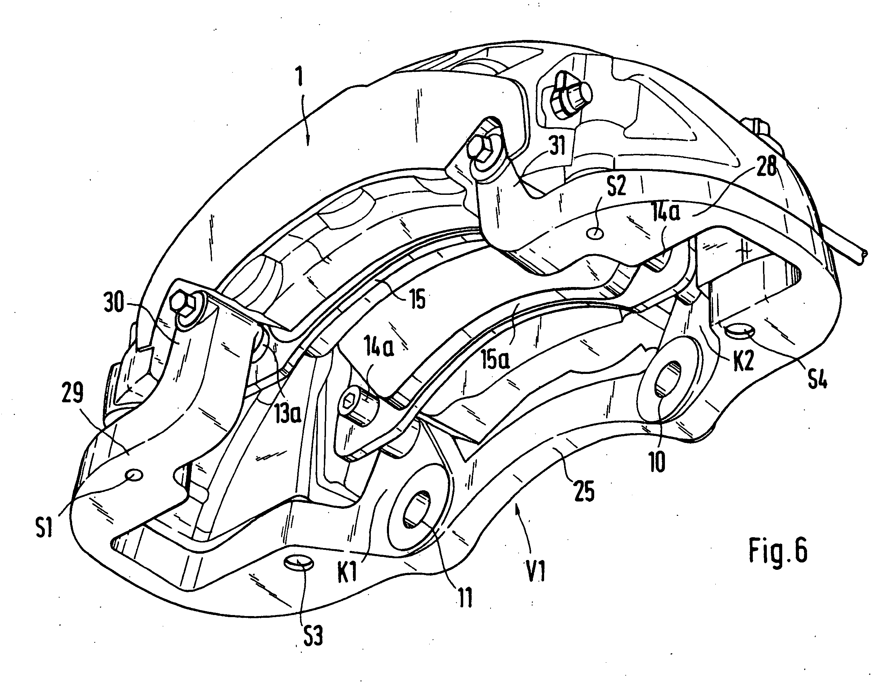

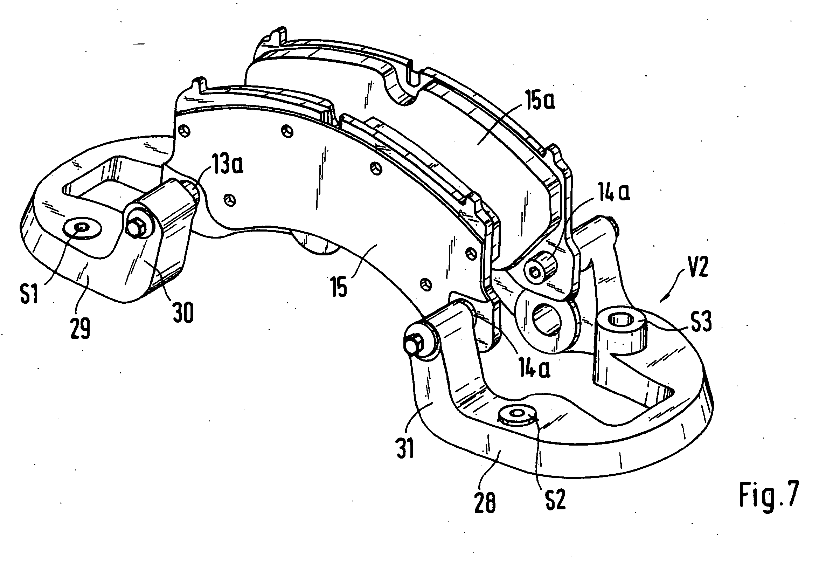

Nach einer weiteren Ausführung gemäß der Fig. 6 und 7 der Erfindung ist das Verstärkungselement V1 entsprechend der beschriebenen Ausführung ausgeführt und angeordnet. Zusätzlich weist das Verstärkungselement V1 an den freien Enden der Fortsätze 28, 29 abgewinkelte Arme 30, 31 auf. In diesen Armen 30, 31 sind Lagerbolzen 13a für den Bremsbelag 15 gehalten.

Am Längssteg 25 des Verstärkungselements V1 sind vorragende Konsolen bzw. Arme K1 und K2 angeordnet, welche Lagerbolzen 14a für den zweiten Bremsbelag 15a aufweisen. Alle Lagerbolzen 13a, 14a sind identisch ausgeführt.

Bei dieser zweiten Ausführung gemäß der Fig. 6 und 7 werden die Umfangskräfte der Bremsbeläge 15 und 15a direkt in das Verstärkungselement V1 eingeleitet. Vom Bremssattel 1 selbst müssen hier im wesentlichen nur die Zuspannkräfte übertragen werden. Das Verstärkungselement V und V1 besteht aus einem hochfesten Stahl. Die zumindest vierfache Verschraubung des Verstärkungselements V und V1 am Bremssattelgehäuse 1 versteift dieses derart, dass das Auftreten von komplexen Eigenschwingungsformen unterbunden und ein Bremsenquietschen weitestgehend unterdrückt wird.

## Patentansprüche

1. Bremssattel (1) für eine Scheibenbremse eines Kraftfahrzeugs mit einem Gehäuse, das beabstandet zueinander und gegenüberstehende Bremssattelschenkel (2, 3) und mindestens eine die beiden Bremssattelschenkel (2, 3) miteinander verbindende Bremssattelbrücke (5, 5a bzw. 6, 7) umfasst, wobei die Bremssattelschenkel (2, 3) und die Bremssattelbrücke (5, 5a bzw. 6, 7) einen freiliegenden Rand als rundum geschlossen verlaufenden integrierten Stützrahmen (8) mit Längs- und Querkanten (L1, L2 bzw. Q1, Q2) bilden und im Gehäuse des Bremssattels (1) Aufnahmen für Hydraulikkolben zur Beaufschlagung von auf Lagerbolzen (13, 14, 13a, 14a) geführten Bremsbelägen (15, 15a) angeordnet sind, wobei das Gehäuse des Bremssattels (1) am Stützrahmen (8) über Befestigungselemente (S1, S2; S3 und S4) mit einem Verstärkungselement (V; V1) verbunden ist, und aus einem zumindest im Bereich eines Bremssattelschenkels (2, 3) des Gehäuses des Bremssattels (1) angeordneten offenen Profilelement besteht **dadurch gekennzeichnet, dass** das Verstärkungselement (V; V1) aus einem einteiligen C-Profilelement mit einem Längssteg (25) und angebundenen Querstegen (26, 27) sowie jeweils anschließenden Fortsätzen (28, 29) an den Querstegen (26, 27) besteht und der Längssteg (25) einem Fahrzeugrad zugerichtet und unmittelbar mitsamt dem Bremssattel (1) an einem Radträger (12) oder Schwenklager verbunden ist.

2. Bremssattel nach Anspruch 1, **dadurch gekennzeichnet, dass** der Längssteg (25) des Verstärkungselements (V; V1) sich unterhalb einer Längskante (L1) eines ersten Schenkels (3) des Stützrahmens (8) innerhalb deren Kontur erstreckt und die beiden Querstege (26, 27) unterhalb der Querkante (Q1 und Q2) angeordnet sind und die Fortsätze (28, 29) dieser Querstege (26, 27) unter einem Teilbereich der weiteren Längskante (L2) des zweiten Schenkels (2) angeordnet sind.

3. Bremssattel nach den Ansprüchen 1 oder 2, **dadurch gekennzeichnet, dass** das Verstärkungselement (V; V1) mit seinem Längssteg (25) beabstandet zu einer Längskante (L1) des Bremssattelschenkels (3) angeordnet ist und Aufnahmen (10, 11) zur Befestigung des Bremssattels (1) am Radträger (12) aufweist.

4. Bremssattel nach den Ansprüchen 1, 2 oder 3, **dadurch gekennzeichnet, dass** das Verstärkungselement (V; V1) mit dem Stützrahmen (8) am Gehäuse des Bremssattels (1) einerseits über den Längssteg (25) und andererseits über den Fortsatz (28, 29) der Querstege (26, 27) mittels der Befestigungselemente (S1 bis S4) verbunden ist.

5. Bremssattel nach einem der vorhergehenden Ansprüche, **dadurch gekennzeichnet, dass** der Längssteg (25) des Verstärkungselements (V; V1) jeweils endseitig erste Befestigungselemente (S1) aufweist, welche aus Schrauben bestehen, die in einem Brückenabschnitt (6 und 7) des Bremssattels (1) gehalten sind.

6. Bremssattel nach einem der vorhergehenden Ansprüche, **dadurch gekennzeichnet, dass** in den Fortsätzen (28, 29) der Querstege (26, 27) jeweils die zweiten Befestigungselemente (S3 und S4) angeordnet sind, welche den ersten Befestigungsmitteln (S1 und S2) gegenüberstehen, die aus Schrauben bestehen, welche im Brückenabschnitt (6, 7) des Bremssattels (1) gehalten sind.

7. Bremssattel nach einem der vorhergehenden Ansprüche, **dadurch gekennzeichnet, dass** die Fortsätze (28, 29) der Querstege (26, 27) sowie der Längssteg (25) des Verstärkungselements (V; V1) sich an den integrierten Stützrahmen (8) des Bremssattels (1) über vorstehende Ansätze (30) abstützen.

8. Bremssattel nach einem der vorhergehenden Ansprüche, **dadurch gekennzeichnet, dass** das Gehäuse des Bremssattels (1) aus einem Aluminium-Guss und das Verstärkungselement (V; V1) aus einem hochfesten Stahl besteht.

9. Bremssattel nach einem der vorhergehenden Ansprüche, **dadurch gekennzeichnet, dass** zwischen den Befestigungselementen (S1 und S2) des Verstärkungselements (V; V1) am Gehäuse des Bremssattels (1) zwei die Bremssattelschenkel (2, 3) miteinander verbindende mittige Brückenabschnitte (5, 5a) angeordnet sind, die zwischen sich eine Ausnehmung (D) aufweisen.

10. Bremssattel nach einem der vorhergehenden Ansprüche, **dadurch gekennzeichnet, dass** wenigstens in Randbereichen des Gehäuses des Bremssattels (1) jeweils unmittelbar benachbart der Brückenabschnitte (5, 5a, 6 und 7) und von Ausnehmungen (D, D1, D2) gewichtserleichternde Aussparungen (20 bis 24) unterschiedlicher Größe angeordnet sind.

11. Bremssattel nach Anspruch 10, **dadurch gekennzeichnet, dass** zwischen den mittigen Brückenabschnitten (5, 5a) und weiteren endseitigen Brückenabschnitten (6, 7) des Gehäuses des Bremssattels (1) jeweils die Ausnehmungen (D, D1 und D2) angeordnet sind, wobei die endseitigen Brückenabschnitte (6, 7) über den freiliegenden Rand des Gehäuses des Bremssattels (1) unmittelbar mit dem Verstärkungselement (8) mittels Befestigungselementen (S1 bis S4) verbunden sind.

12. Bremssattel nach einem der vorhergehenden Ansprüche, **dadurch gekennzeichnet, dass** die Fortsätze (28, 29) des Verstärkungselements (V1) am freien Ende abgewinkelte Arme (30, 31) aufweisen, die endseitig Lagerbolzen (13a) für einen ersten Bremsbelag (15) aufweisen, denen am Längssteg (25) des Verstärkungselements (V1) weitere Lagerbolzen (14a) für einen zweiten Bremsbelag (15a) gegenüberstehen.

13. Bremssattel nach Anspruch 12, **dadurch gekennzeichnet, dass** am Längssteg (25) des Verstärkungselements (V1) zwei vorragende Konsolen oder Arme (K1 oder K2) angeordnet sind, welche die Lagerbolzen (14a) für den zweiten Bremsbelag (15a) aufnehmen.

## Claims

1. Brake caliper (1) for a disk brake of a motor vehicle, having a housing which comprises brake caliper limbs (2, 3) which are spaced apart from each other and lie opposite each other and at least one brake caliper bridge (5, 5a or 6, 7) which connects the two brake caliper limbs (2, 3) to one another, the brake caliper limbs (2, 3) and the brake caliper bridge (5, 5a or 6, 7) forming an exposed edge as an integrated supporting frame (8) which extends in a closed manner all round and has longitudinal and transverse edges (L1, L2 or Q1, Q2), and recesses for hydraulic pistons for loading brake linings (15, 15a) which are guided on bearing pins (13, 14, 13a, 14a) being arranged in the housing of the brake caliper (1), the housing of the brake caliper (1) being connected on the supporting frame (8) via fastening elements (S1, S2; S3 and S4) to a reinforcing element (V; V1) and comprises an open profile element which is arranged at least in the region of a brake caliper limb (2, 3) of the housing of the brake caliper (1), **characterized in that** the reinforcing element (V; V1) comprises a single-piece C-profile element, having a longitudinal web (25) and attached transverse webs (26, 27), and in each case adjoining projections (28, 29) on the transverse webs (26, 27), and the longitudinal web (25) is connected to a wheel carrier (12) or pivoting bearing in a manner which is oriented toward a vehicle wheel and is direct together with the brake caliper (1).

2. Brake caliper according to Claim 1, **characterized in that** the longitudinal web (25) of the reinforcing element (V; V1) extends below the longitudinal edge (L1) of a first limb (3) of the supporting frame (8), within the contour of said longitudinal edge (L1), and the two transverse webs (26, 27) are arranged below the transverse edge (Q1 and Q2) and the projections (28, 29) of these transverse webs (26, 27) are arranged under a part region of the further longitudinal edge (L2) of the second limb (2).

3. Brake caliper according to Claim 1 or 2, **characterized in that** the reinforcing element (V; V1) is arranged with its longitudinal web (25) spaced apart from the longitudinal edge (L1) of the brake caliper limb (3) and has receptacles (10, 11) for fastening the brake caliper (1) to the wheel carrier (12).

4. Brake caliper according to Claim 1, 2 or 3, **characterized in that** the reinforcing element (V; V1) is connected to the supporting frame (8) on the housing of the brake caliper (1), firstly via the longitudinal web (25) and secondly via the projection (28, 29) of the transverse webs (26, 27), by means of the fastening elements (S1 to S4).

5. Brake caliper according to one of the preceding claims, **characterized in that** the longitudinal web (25) of the reinforcing element (V; V1) have, in each case on the end side, first fastening elements (S1) which comprise screws which are held in a bridge section (6 and 7) of the brake caliper (1).

6. Brake caliper according to one of the preceding claims, **characterized in that** in each case the second fastening elements (S3 and S4) are arranged in the projections (28, 29) of the transverse webs (26, 27), which second fastening elements (S3 and S4) lie opposite the first fastening means (S1 and S2) and comprise screws which are held in the bridge section (6, 7) of the brake caliper (1).

7. Brake caliper according to one of the preceding claims, **characterized in that** the projections (28, 29) of the transverse webs (26, 27) and the longitudinal web (25) of the reinforcing element (V; V1) are supported on the integrated supporting frames (8) of the brake caliper (1) via protruding extensions (30).

8. Brake caliper according to one of the preceding claims, **characterized in that** the housing of the brake caliper (1) comprises an aluminium casting and the reinforcing element (V; V1) comprises a high strength steel.

9. Brake caliper according to one of the preceding claims, **characterized in that** two central bridge sections (5, 5a) which connect the brake caliper limbs (2, 3) to one another and have a recess (D) between them are arranged on the housing of the brake caliper (1) between the fastening elements (S1 and S2) of the reinforcing element (V; V1).

10. Brake caliper according to one of the preceding claims, **characterized in that** weight-saving cutouts (20 to 24) of different size are arranged at least in edge regions of the housing of the brake caliper (1), in each case directly adjacently to the bridge sections (5, 5a, 6 and 7) and recesses (D, D1, D2).

11. Brake caliper according to Claim 10, **characterized in that** in each case the recesses (D, D1 and D2) are arranged between the central bridge sections (5, 5a) and further end-side bridge sections (6, 7) of the housing of the brake caliper (1), the end-side bridge sections (6, 7) being connected directly to the reinforcing element (8) by means of fastening elements (S1 to S4) via the exposed edge of the housing of the brake caliper (1).

12. Brake caliper according to one of the preceding claims, **characterized in that** the projections (28, 29) of the reinforcing element (V1) have arms (30, 31) which are angled away at the free end and have bearing pins (13a) for a first brake lining (15) on the end side, opposite which bearing pins (13a) further bearing pins (14a) for a second brake lining (15a) lie on the longitudinal web (25) of the reinforcing element (V1).

13. Brake caliper according to Claim 12, **characterized in that** two protruding brackets or arms (K1 or K2) which receive the bearing pins (14a) for the second brake lining (15a) are arranged on the longitudinal web (25) of the reinforcing element (V1).

## Revendications

1. Etrier de frein (1) pour un frein à disque d'un véhicule automobile, avec un boîtier qui comprend des branches d'étrier de frein (2, 3) opposées et espacées l'une de l'autre et au moins un pont d'étrier de frein (5, 5a ou 6, 7) reliant l'une à l'autre les deux branches d'étrier de frein (2, 3), dans lequel les branches d'étrier de frein (2, 3) et le pont d'étrier de frein (5, 5a ou 6, 7) forment un bord libre en forme de cadre d'appui intégré (8) s'étendant de façon fermée en périphérie avec des arêtes longitudinales et transversales (L1, L2 ou Q1, Q2), et des logements pour des pistons hydrauliques destinés à commander des garnitures de frein (15, 15a) guidées sur des tourillons (13, 14, 13a, 14a) sont disposés dans le boîtier de l'étrier de frein (1), dans lequel le boîtier de l'étrier de frein (1) est relié à un élément de renforcement (V; V1) par des éléments de fixation (S1, S2; S3 et S4) sur le cadre d'appui (8), et se compose d'un élément profilé ouvert disposé au moins dans la région d'une branche d'étrier de frein (2, 3) du boîtier de l'étrier de frein (1), **caractérisé en ce que** l'élément de renforcement (V; V1) se compose d'un élément profilé en C d'une seule pièce avec une nervure longitudinale (25) et des nervures transversales adjacentes (26, 27) ainsi que chaque fois des prolongements (28, 29) raccordés aux nervures transversales (26, 27) et la nervure longitudinale (25) est orientée vers une roue de véhicule et est reliée directement avec l'étrier de frein (1) à un support de roue (12) ou à un palier pivotant.

2. Etrier de frein selon la revendication 1, **caractérisé en ce que** la nervure longitudinale (25) de l'élément de renforcement (V; V1) s'étend en dessous d'une arête longitudinale (L1) d'une première branche (3) du cadre d'appui (8) à l'intérieur du contour de celle-ci et les deux nervures transversales (26, 27) sont disposées en dessous de l'arête transversale (Q1 et Q2) et les prolongements (28, 29) de ces nervures transversales (26, 27) sont disposés en dessous d'une région partielle de l'autre arête longitudinale (L2) de la deuxième branche (2).

3. Etrier de frein selon les revendications 1 ou 2, **caractérisé en ce que** l'élément de renforcement (V; V1) est disposé avec sa nervure longitudinale (25) à distance d'une arête longitudinale (L1) de la branche d'étrier de frein (3) et présente des logements (10, 11) destinés à la fixation de l'étrier de frein (1) sur le support de roue (12).

4. Etrier de frein selon les revendications 1, 2 ou 3, **caractérisé en ce que** l'élément de renforcement (V; V1) est relié au cadre d'appui (8) sur le boîtier de l'étrier de frein (1) d'une part par la nervure longitudinale (25) et d'autre part par le prolongement (28, 29) des nervures transversales (26, 27) au moyen des éléments de fixation (S1 à S4).

5. Etrier de frein selon l'une quelconque des revendications précédentes, **caractérisé en ce que** la nervure longitudinale (25) de l'élément de renforcement (V; V1) présente chaque fois à l'extrémité des premiers éléments de fixation (S1), qui se composent de vis qui sont maintenues dans une partie de pont (6 et 7) de l'étrier de frein (1).

6. Etrier de frein selon l'une quelconque des revendications précédentes, **caractérisé en ce que** les deuxièmes éléments de fixation (S3 et S4) sont disposés respectivement dans les prolongements (28, 29) des nervures transversales (26, 27), et sont situés en face des premiers éléments de fixation (S1 et S2), qui se composent de vis qui sont maintenues dans la partie de pont (6, 7) de l'étrier de frein (1).

7. Etrier de frein selon l'une quelconque des revendications précédentes, **caractérisé en ce que** les prolongements (28, 29) des nervures transversales (26, 27) ainsi que la nervure longitudinale (25) de l'élément de renforcement (V; V1) s'appuient sur le cadre d'appui intégré (8) de l'étrier de frein (1) au moyen de bouts saillants (30).

8. Etrier de frein selon l'une quelconque des revendications précédentes, **caractérisé en ce que** le boîtier de l'étrier de frein (1) se compose d'aluminium moulé et l'élément de renforcement (V; V1) se compose d'un acier à haute résistance.

9. Etrier de frein selon l'une quelconque des revendications précédentes, **caractérisé en ce que** deux parties de pont (5, 5a) centrales reliant l'une à l'autre les branches d'étrier de frein (2, 3), et qui forment entre elles un évidement (D), sont disposées sur le boîtier de l'étrier de frein (1), entre les éléments de fixation (S1 et S2) de l'élément de renforcement (V; V1).

10. Etrier de frein selon l'une quelconque des revendications précédentes, **caractérisé en ce que** des évidements d'allègement du poids (20 à 24) de grandeurs différentes sont disposés au moins dans les régions de bord du boîtier de l'étrier de frein (1) chaque fois immédiatement à proximité des parties de pont (5, 5a, 6 et 7) et d'évidements (D, D1, D2).

11. Etrier de frein selon la revendication 10, **caractérisé en ce que** les évidements (D, D1, D2) sont chaque fois disposés entre les parties de pont centrales (5, 5a) et d'autres parties de pont d'extrémité (6, 7) du boîtier de l'étrier de frein (1), dans lequel les parties de pont d'extrémité (6, 7) sont reliées directement à l'élément de renforcement (8) par le bord libre du boîtier de l'étrier de frein (1) au moyen d'éléments de fixation (S1 à S4).

12. Etrier de frein selon l'une quelconque des revendications précédentes, **caractérisé en ce que** les prolongements (28, 29) de l'élément de renforcement (V1) présentent à leur extrémité libre des bras coudés (30, 31), qui comportent à leur extrémité des tourillons (13a) pour une première garniture de frein (15), en face desquels il se trouve sur la nervure longitudinale (25) de l'élément de renforcement (V1) d'autres tourillons (14a) pour une deuxième garniture de frein (15a).

13. Etrier de frein selon la revendication 12, **caractérisé en ce que** deux consoles ou bras en saillie (K1 ou K2) sont disposés sur la nervure longitudinale (25) de l'élément de renforcement (V1), et portent les tourillons (14a) pour la deuxième garniture de frein (15a).
